Europäisches Patentamt

European Patent Office

Office européen des brevets

(19)

(11) Veröffentlichungsnummer: **0 240 028**
**B1**

(12) **EUROPÄISCHE PATENTSCHRIFT**

(45) Veröffentlichungstag der Patentschrift:
22.11.90

(21) Anmeldenummer: 87104931.8

(22) Anmeldetag: 03.04.87

(51) Int. Cl.⁵: **F16F 13/00**, F16F 15/02

(54) Vorrichtung zur federnden Abstützung von Maschinen auf dem Boden.

(30) Priorität: 04.04.86 DE 8609027 U

(43) Veröffentlichungstag der Anmeldung:
07.10.87 Patentblatt 87/41

(45) Bekanntmachung des Hinweises auf die Patenterteilung:
22.11.90 Patentblatt 90/47

(84) Benannte Vertragsstaaten:
AT BE CH DE ES FR GB GR IT LI LU NL SE

(56) Entgegenhaltungen:
DE-A- 2 353 868
DE-A- 2 712 641
DE-A- 3 239 963
DE-A- 3 312 529
DE-B- 1 090 108
DE-B- 1 285 792
GB-A- 2 055 172

(73) Patentinhaber: **Adolf Fähnle GmbH & Co. KG,
Jahnstrasse 106, D-7320 Göppingen(DE)**
Patentinhaber: **Bilz Schwingungstechnik GmbH,
Hertichstrasse 81, D-7250 Leonberg-Eltingen(DE)**

(72) Erfinder: **Franzke, Heinrich, Gairenstrasse 21,
D-7332 Eislingen(DE)**
Erfinder: **Bilz, Dieter, Hertichstrasse 81,
D-7250 Leonberg-Eltingen(DE)**

(74) Vertreter: **Haug, Dietmar et al, Patentanwälte Andrae,
Flach, Haug, Kneissl Steinstrasse 44,
D-8000 München 80(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft eine Vorrichtung zur federnden Abstützung von Maschinen auf dem Boden gemäß dem Oberbegriff des Patentanspruches 1.

Eine solche Vorrichtung ist aus der DE-C 2 353 868 bekannt. Bei dieser Vorrichtung ist der zentrale Abschnitt der Stirnwand als zylindrischer Vorsprung ausgebildet, auf dessen oberem Ende die Lastträgerplatte angeordnet ist und dessen unteres Ende mit dem oberen Ende der hohlzylindrischen Seitenwand durch den kreisringförmigen Abschnitt der Stirnwand verbunden ist, der als ebene Kreisringscheibe ausgebildet ist. Entlang der Außenfläche der hohlzylindrischen Seitenwand des Gummibauteiles sind mehrere starre Versteifungsringe im axialen Abstand voneinander angeordnet, welche die hohlzylindrische Seitenwand des Gummibauteiles koaxial umgeben. Am unteren Ende ist die hohlzylindrische Seitenwand des Gummibauteiles durch eine Klebeschicht mit der Oberfläche der Bodenplatte fest verbunden. Die Lastträgerplatte oder eine mit ihr verspannte Grundplatte erstreckt sich in radialer Richtung bis über den Außenumfang der hohlzylindrischen Seitenwand des Gummibauteiles, wodurch sich die Lastträgerplatte oder die Grundplatte auf dem oberen Ende der hohlzylindrischen Seitenwand abstützen kann, wenn die Stirnwand infolge einer erhöhten Belastung entsprechend tief in die mit Luft gefüllte Druckkammer eingedrückt wird.

Die vorbekannte Vorrichtung hat den Nachteil, daß wegen der radialen Erstreckung des kreisringförmigen Abschnittes die Stirnwand des Gummibauteiles einer Axialbelastung nur einen geringen Verformungswiderstand entgegenzusetzen vermag und in dem rechtwinkligen Übergang des kreisringförmigen Abschnittes in den zentralen zylindrischen Vorsprung einerseits und in das obere Ende der hohlzylindrischen Seitenwand andererseits bei einer Axialbelastung Spannungsspitzen entstehen, die bei entsprechender Größe zu Rissen in dem Gummibauteil führen können. Außerdem hat die vorbekannte Vorrichtung den Nachteil, daß bei einer axialen Überlastung die Vorrichtung durch Ausknicken im Bereich zwischen den Versteifungsringen oder durch Ablösen des unteren Endes der hohlzylindrischen Seitenwand von der Bodenplatte zusammenbrechen kann. Beim Ausknicken der Vorrichtung besteht aber wieder die Gefahr der Rißbildung, die zur vollständigen Zerstörung der Vorrichtung führen kann. Außerdem besteht beim Zusammenbrechen oder Ausknicken der Vorrichtung die Gefahr, daß die abgestützte Maschine umkippt oder in eine die Maschine schädigende Schräglage gerät.

Die Aufgabe der Erfindung besteht darin, die gattungsgemäße Vorrichtung so auszubilden, daß die schwingungsdämpfende und stoßabsorbierende Wirkung der Vorrichtung erhöht ist und ein Zusammenbrechen oder Ausknicken der Vorrichtung bei Überlastung oder fehlendem Innendruck ausgeschlossen ist.

Die der Erfindung zugrundeliegende Aufgabe wird durch die Merkmale des kennzeichnenden Teiles des Patentanspruches 1 gelöst.

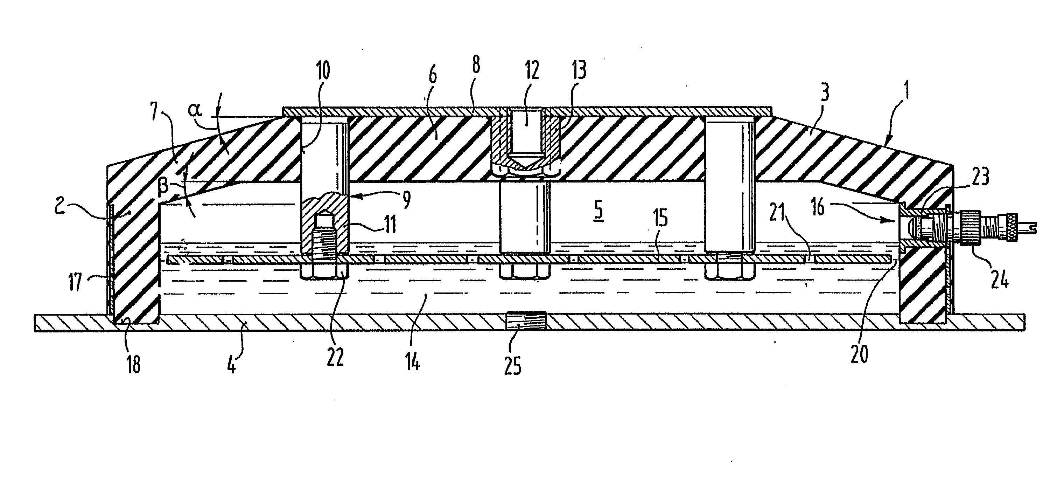

Der GB-A 2 055 172 ist zwar ein in einem Metallgehäuse angeordnetes elastisches Lager für die Dämpfung von Schwingungen an Motoraufhängungen in Kraftfahrzeugen aufnehmbar, das unter anderem gemäß Figur 2 eine Hubbegrenzung aufweist, doch dient sie dort der Begrenzung von Schwingungen großer Amplitude. Solche Hubbegrenzungen werden im Fahrzeugbau z.B auch in Verbindung mit Stossdämpfern im Bereich der Radaufhängung angewandt. Mit der erfindungsgemäßen Vorrichtung zur Abstützung stationärer Maschinen wird dagegen das Problem des Ausknickens des gummielastischen Federkörpers bei dessen axialer Überlastung gelöst.

Durch die kegelstumpfförmige Ausbildung des kreisförmigen Randabschnittes der Stirnwand kann die Stirnwand einer Axialbelastung einen erhöhten Verformungswiderstand entgegensetzen. Außerdem werden durch den weniger abrupten Übergang des kreisringförmigen Randabschnittes in den zentralen kreisförmigen Abschnitt der Stirnwand einerseits und in das obere Ende der hohlzylindrischen Seitenwand andererseits Spannungsspitzen in dem kreisringförmigen Randabschnitt bei Axialbelastung weitgehend vermieden. Die erfindungsgemäße Vorrichtung kann mechanische Schwingungen relativ hoher Frequenz und relativ niedriger Frequenz gut dämpfen und absorbieren. Die Stirnwand der erfindungsgemäßen Vorrichtung läßt sich nur so weit in die Druckkammer eindrücken, bis die freien Enden der Füße auf der Bodenplatte aufsitzen, wodurch ein Zusammenbrechen oder Ausknicken der Vorrichtung bei Überlastung oder fehlendem Innendruck ausgeschlossen ist.

Zur Verbesserung der Dämpfungseigenschaften der Vorrichtung können der oder die Füße im Bereich ihrer freien Enden einen radial verbreiterten Abschnitt aufweisen, der im unverformten Zustand des Gummibauteiles in eine Flüssigkeit eintaucht, welche die Druckkammer teilweise ausfüllt. Der verbreiterte Abschnitt kann z.B. aus einer parallel zur Bodenplatte verlaufenden Platte bestehen, die an dem oder den Füßen befestigt ist und zwischen sich und der hohlzylindrischen Seitenwand eine oder mehrere Vorbeiströmöffnungen bildet und/oder eine oder mehrere Durchströmöffnungen aufweist. Die Platte kann z.B. eine Lochplatte sein.

Beim Hin- und Herbewegen der Füße aufgrund einer schwingenden Belastung der Lastträgerplatte ist die Flüssigkeit gezwungen, zwischen den Räumen diesseits und jenseits des radial verbreiterten Abschnittes des oder der Füße hin- und herzuströmen, wodurch sie der jeweiligen Bewegung des oder der Füße und damit der Lastträgerplatte eine bremsende Kraft entgegensetzt.

Um die Druckkammer mit Luft und Flüssigkeit befüllen zu können, wird vorzugsweise ein kombiniertes Luft-Flüssigkeitsventil verwendet, das in der hohlzylindrischen Seitenwand des Gummibauteiles angeordnet wird.

Weitere vorteilhafte Weiterbildungen der Erfindung sind den Unteransprüchen 5 bis 11 zu entnehmen.

Ein Ausführungsbeispiel der Erfindung ist in der Zeichnung dargestellt, die einen Schnitt durch eine erfindungsgemäße Vorrichtung zeigt, und wird im folgenden näher beschrieben.

Eine Vorrichtung zur federnden Abstützung von Maschinen auf dem Boden weist ein glockenförmiges Gummibauteil 1 auf, das aus einer hohlzylindrischen Seitenwand 2 und einer im wesentlichen radial sich erstreckenden Stirnwand 3 besteht, die am oberen Ende der hohlzylindrischen Seitenwand 2 angeordnet ist. Am unteren Ende ist die hohlzylindrische Seitenwand 2 durch Vulkanisation mit einer radial sich erstreckenden, kreisförmigen Bodenplatte 4 aus Metall fest und dicht verbunden, die zusammen mit der Seitenwand 2 und der Stirnwand 3 eine Druckkammer 5 begrenzt.

Die Stirnwand 3 besteht aus einem zentralen kreisscheibenförmigen Abschnitt 6, der koaxial zu der hohlzylindrischen Seitenwand 2 angeordnet ist und eine ebene Außenfläche aufweist, deren Durchmesser kleiner als der Durchmesser der Innenfläche des zentralen Stirnwandabschnittes ist, und einem kreisringförmigen Randabschnitt 7, der kegelstumpfförmig ausgebildet ist, den zentralen Stirnwandabschnitt 6 konzentrisch umgibt und ihn mit dem oberen Ende der hohlzylindrischen Seitenwand 2 verbindet. Die äußere und innere Mantellinie des kegelstumpfförmigen Randabschnittes schließen jeweils einen gleichen Winkel α bzw. β von etwa 15° mit der Ebene der Außenfläche bzw. der der Innenfläche des zentralen kreisförmigen Abschnittes 6 der Stirnwand 3 ein. Die Wanddicke des kegelstumpfförmigen Randabschnittes 7 ist konstant und geringer als die ebenfalls konstante Wanddicke des zentralen Stirnwandabschnittes 6. Der Wanddickenübergang zwischen dem kegelstumpfförmigen Randabschnitt 7 und dem kreisförmigen zentralen Abschnitt 6 erfolgt daher allmählich.

Die Außenfläche des zentralen kreisförmigen Stirnwandabschnittes 6 liegt in einer Ebene, die vom oberen Ende der hohlzylindrischen Seitenwand 2 axial nach oben versetzt ist.

Eine kreisscheibenförmige Lastträgerplatte 8 aus Metall, die den gleichen Durchmesser wie die Außenfläche des zentralen kreisförmigen Stirnwandabschnittes 6 aufweist, ist auf der Außenfläche des zentralen Stirnwandabschnittes 6 koaxial angeordnet. Die Lastträgerplatte 8 und die Bodenplatte 4 verlaufen parallel und sind kcaxial zueinander. Auf ihrer der Außenfläche des zentralen Stirnwandabschnittes 5 zugekehrten Unterseite sind auf einer konzentrischen Kreislinie vier Metallfüße 9 mit jeweils einem Ende senkrecht angeschweißt, die einen Abstand von jeweils 90° auf der Kreislinie voneinander haben. Jeder Fuß 9 ist mit einem Endabschnitt, der an der Lastträgerplatte 8 befestigt ist, dicht durch ein jeweiliges Durchgangsloch 10 in dem zentralen kreisförmigen Stirnwandabschnitt 6 geführt und ragt in axialer Richtung aus dem zentralen kreisförmigen Stirnwandabschnitt hervor, so daß sich sein freies Ende in der Druckkammer 5 befindet. Jeder Fuß 9 besteht aus einem einen kreisförmigen Querschnitt aufweisenden Bolzen 11, der das an der Lastträgerplatte 8 angeschweißte Ende des Fußes und den durch das jeweilige Durchgangsloch 10 geführten Endabschnitt des Fußes aufweist, und einer in ein Sackloch, das in dem von der Lastträgerplatte 8 entfernten unteren Ende des jeweiligen Bolzens 11 koaxial angeordnet ist, eingedrehten Schraube 22, deren Kopf das freie Ende des Fußes 9 bildet. Sowohl die Lastträgerplatte 8 als auch die Füße 9 ist mit ihrer Unterseite bzw. sind mit ihren durch die Durchgangslöcher geführten Endabschnitten durch Vulkanisation mit dem zentralen kreisförmigen Abschnitt der Stirnwand 3 verbunden. Die freien Enden der Füße 9, welche durch die Köpfe der Schrauben 22 gebildet werden, haben im unverformten Zustand der Feder einen axialen Abstand von der Bodenplatte 4, der so bemessen ist, daß die freien Enden der Füße 9 mit der Bodenplatte 4 zur Anlage kommen, wenn eine auf die Lastträgerplatte 8 wirkende Axiallast einen vorbestimmten Grenzwert überschreitet. Eine Verformung der Stirnwand 3 nach innen aufgrund einer Axiallast, die auf die Lastträgerplatte 8 wirkt, wird somit durch Anlage der freien Enden der Füße 9 an der Bodenplatte 4 begrenzt. Wenn die Füße 9 auf der Bodenplatte 4 aufsitzen, kann die Lastträgerplatte 8 nicht mehr weiter nach unten gedrückt werden. Ein Zusammensacken oder ein seitliches Ausknicken der Vorrichtung infolge einer Überbelastung oder eines zu geringen Innendruckes wird bei der erfindungsgemäßen Vorrichtung zuverlässig vermieden.

Die Lastträgerplatte 8 hat eine zentrale Öffnung 12, an die sich auf der Unterseite der Lastträgerplatte 8 die Gewindesackbohrung einer Hutmutter 13 aus Metall anschließt, die an der Unterseite der Lastträgerplatte 8 angeschweißt ist und in einem Sackloch in dem zentralen Stirnwandabschnitt 6 sitzt. Durch die Öffnung 12 kann eine zur Befestigung der Lastträgerplatte an der abzustützenden Maschine dienende Schraube in die Hutmutter 13 eingedreht werden. Auch die Hutmutter 13 ist mit der Stirnwand 3 durch Vulkanisation fest verbunden.

Die Druckkammer 5 ist teilweise mit einer viskosen Flüssigkeit 14, wie z.B. Öl, gefüllt, wobei die Flüssigkeitsmenge so bemessen ist, daß die freien Enden der Füße 9 unterhalb des Flüssigkeitsspiegels sind, wenn das Gummibauteil 1 unverformt ist. Die Füße 9 weisen im Bereich ihrer freien Enden einen verbreiterten Abschnitt in Form einer kreisförmigen Lochplatte 15 auf, die mit Hilfe der Schrauben 22 an den unteren Enden der Bolzen 11 befestigt ist und sich in radialer Richtung unterhalb des Flüssigkeitsspiegels bis nahe an die Innenfläche der hohlzylindrischen Seitenwand 2 des Gummibauteiles 1 erstreckt. Bei einer Abwärts- und/oder Aufwärtsbewegung der Lochplatte 15 muß die Flüssigkeit 14 durch die Öffnungen 21 der Lochplatte 15 hindurchströmen und am Rand der Lochplatte durch die Öffnung 20 vorbeiströmen, wodurch der Bewegung ein Widerstand entgegengesetzt wird.

Oberhalb des Flüssigkeitsspiegels befindet sich die Luft unter einem erhöhten Druck in der Druckkammer 5. Stöße und Schwingungen, die auf die Lastträgerplatte 8 wirken, werden somit nicht nur durch die elastische Deformation des Gummibauteiles 1, sondern auch durch die Kompression der in der Druckkammer befindlichen Luft und den Strömungswiderstand der Lochplatte 15 differenziert gedämpft und absorbiert.

Die Luft und die Flüssigkeit 14 werden durch ein kombiniertes Luft-Flüssigkeitsventil 16, das in der hohlzylindrischen Seitenwand 2 angeordnet ist, in die Druckkammer 5 eingefüllt. Das Ventil 16 besteht im wesentlichen aus einer in einem Durchgangsloch in der Seitenwand 2 fest angeordneten Ventilhülse 23 aus Messing mit einem Innengewinde, in das ein Luftventil 24 lösbar und dicht eingeschraubt ist. Durch das Luftventil 24 kann mehr oder weniger Luft in die Druckkammer 5 gepumpt werden oder auch wieder ausströmen gelassen werden, so daß der Innendruck des Gummibauteiles variabel ist und den Bedürfnissen entsprechend angepaßt werden kann. Ohne das Luftventil 24 kann durch die Ventilhülse 23 Flüssigkeit in die Druckkammer 5 gefüllt oder aus ihr abgelassen werden.

In der hohlzylindrischen Seitenwand 2 ist ein Metallzylinder 17 koaxial eingebettet und durch Vulkanisation mit der Seitenwand 2 fest verbunden. Der Metallzylinder 17 ist koaxial zu der Seitenwand 2 angeordnet und wird nur von einer dünnen Außenschicht der Seitenwand 2 umgeben. Der Metallzylinder 17 besteht aus einem Lochblech, das sich besser mit dem Gummibauteil 1 durch Vulkanisation verbindet als ein Blech ohne Löcher. Er hat die Aufgabe, das Gummibauteil vor Beschädigung durch seitliche Stöße, die durch von der abzustützenden Maschine herabfallende Metallteile oder durch unbeabsichtigtes Rammen der Vorrichtung mit einem Fahrzeug verursacht werden können, zu schützen.

Das untere Ende der Seitenwand 2 ist formschlüssig in einer flachen Kreisringnut 18 aufgenommen, die in die Oberfläche der Bodenplatte 4 koaxial eingeformt ist. Durch Vulkanisation ist das in die Nut 18 ragende Ende der Seitenwand 2 mit der Oberfläche der Nut 18 fest verbunden. Durch diese Art der Befestigung des Gummibauteiles 1 an der Bodenplatte 4 wird sichergestellt, daß eine seitliche Relativverschiebung zwischen dem Gummibauteil 1 und der Bodenplatte 4, beispielsweise bei einer Überbeanspruchung der Vorrichtung oder auch bei seitlichen Stößen, ausgeschlossen ist.

In der Mitte der Bodenplatte 4 ist eine mit einem Innengewinde versehene durchgehende Bohrung angeordnet, durch die ebenfalls Flüssigkeit in die Druckkammer 5 eingefüllt oder aus ihr abgelassen werden kann. In Betrieb ist die Bohrung in der Bodenplatte 4 durch eine Imbusschraube 25 dicht verschlossen.

Die erfindungsgemäße Vorrichtung wird dadurch hergestellt, daß die zum Teil miteinander verschweißten Metallteile in einer Form angeordnet werden und der Gummi im flüssigen Zustand in die Form eingepreßt wird, wonach er ausvulkanisiert wird, wobei die von ihm benetzten Metallteile eine feste Gummi-Metallverbindung mit ihm eingehen. Dann werden die Flüssigkeit und Luft in die Druckkammer 5 eingefüllt, die dann dicht verschlossen wird.

## Patentansprüche

1. Vorrichtung zur federnden Abstützung von Maschinen auf dem Boden mit einer Lastträgerplatte (8) und einem glockenförmigen Gummibauteil (1), das die Lastträgerplatte (8) abstützt, und das aus einer hohlzylindrischen Seitenwand (2) und einer im wesentlichen radial sich erstreckenden Stirnwand (3) an einem Ende der hohlzylindrischen Seitenwand (2) besteht und am anderen Ende der hohlzylindrischen Seitenwand (2) durch eine radial sich erstreckende Bodenplatte (4) dicht verschlossen ist, die parallel zu der Lastträgerplatte (8) verläuft und zusammen mit der Seitenwand (2) und der Stirnwand (3) des Gummibauteiles (1) eine mit Luft befüllbare Druckkammer (5) begrenzt, wobei die Stirnwand (3) des Gummibauteiles (1) aus einem zentralen kreisförmigen Abschnitt (6), der eine radial sich erstreckende, ebene Außenfläche hat, die im unverformten Zustand des Gummibauteiles (1) von dem einen Ende der hohlzylindrischen Seitenwand (2) nach außen axial versetzt ist, und einem koaxial um den zentralen kreisförmigen Abschnitt (6) herum angeordneten, kreisringförmigen Randabschnitt (7) besteht, der den zentralen kreisförmigen Abschnitt (6) der Stirnwand (3) mit dem einen Ende der hohlzylindrischen Seitenwand (2) verbindet und eine geringere Wanddicke als der zentrale kreisförmige Abschnitt (6) der Stirnwand hat, wobei die Lastträgerplatte (8) auf der Außenfläche des zentralen kreisförmigen Abschnittes (6) der Stirnwand (3) angeordnet und fest mit der Stirnwand (3) verbunden ist, dadurch gekennzeichnet, daß der kreisringförmige Randabschnitt (7) der Stirnwand (3) des glockenförmigen Gummibauteiles (1) kegelstumpfförmig ausgebildet ist, so dass die schwingungsdämpfende und stoßabsorbierende Wirkung der Vorrichtung erhöht ist und aus dem zentralen kreisförmigen Abschnitt (6) der Stirnwand (3) des glockenförmigen Gummibauteiles (1) ein oder mehrere Füße (9) in axialer Richtung in die Druckkammer (5) vorspringen, deren freie Enden im unverformten Zustand des Gummibauteiles (1) einen axialen Abstand von der Bodenplatte (4) haben und mit der Bodenplatte (4) zur Anlage kommen, wenn eine auf die Lastträgerplatte (8) wirkende Axiallast einen vorbestimmten Grenzwert überschreitet, und deren andere Enden mit der Lastträgerplatte (8) fest verbunden sind, so daß die Axiallast die Lastträgerplatte (8) nicht weiter in Richtung der Bodenplatte (4) bewegen kann, wenn die freien Enden der Füße (9) auf der Bodenplatte (4) aufsitzen und ein Zusammenbrechen oder Ausknicken der Vorrichtung bei Überlastung oder fehlendem Innendruck ausgeschlossen ist.

2. Vorrichtung nach Anspruch 1, dadurch gekennzeichnet, daß der oder die Füße (9) im Bereich ihrer freien Enden einen radial verbreiterten Abschnitt (15) aufweisen, der im unverformten Zustand des Gummibauteiles (1) in eine Flüssigkeit (14) eintaucht, welche die Druckkammer (5) teilweise ausfüllt.

3. Vorrichtung nach Anspruch 2, dadurch gekennzeichnet, daß der verbreiterte Abschnitt aus einer parallel zur Bodenplatte (4) verlaufenden Platte (15) besteht, die an dem oder den Füßen (9) befestigt ist und zwischen sich und der hohlzylindrischen Seitenwand (2) eine oder mehrere Vorbeiströmöffnungen (21) aufweist.

4. Vorrichtung nach Anspruch 3, dadurch gekennzeichnet, daß die Platte (15) eine Lochplatte ist.

5. Vorrichtung nach einem der vorhergehenden Ansprüche, wobei in der hohlzylindrischen Seitenwand (2) ein Ventil (16) angeordnet ist, dadurch gekennzeichnet, daß das Ventil (16) ein kombiniertes Luft-/Flüssigkeitsventil ist, durch das sowohl Luft als auch Flüssigkeit in die Druckkammer (5) einfüllbar ist.

6. Vorrichtung nach einem der vorhergehenden Ansprüche, dadurch gekennzeichnet, daß der zentrale kreisförmige Abschnitt (6) der Stirnwand (3) eine der Zahl der Füße (9) entsprechende Anzahl von axial verlaufenden Durchgangslöchern (10) hat, und der oder die Füße (9) mit jeweils einem Endabschnitt, der an der Lastträgerplatte (8) befestigt ist, in dem oder den Durchgangslöchern (10) dicht koaxial angeordnet sind.

7. Vorrichtung nach Anspruch 6, dadurch gekennzeichnet, daß die Lastträgerplatte (8) und der oder die Füße (9) durch Vulkanisation fest mit der Stirnwand (3) des Gummibauteiles (1) verbunden sind.

8. Vorrichtung nach einem der vorhergehenden Ansprüche, dadurch gekennzeichnet, daß mehrere Füße (9) vorgesehen sind, die auf einer innerhalb des Randes der Lastträgerplatte (8) verlaufenden Kreislinie in jeweils gleichen Winkelabständen angeordnet sind.

9. Vorrichtung nach einem der vorhergehenden Ansprüche, dadurch gekennzeichnet, daß die Bodenplatte (4) eine Ringnut (18) aufweist, welche das andere Ende der hohlzylindrischen Seitenwand (2) aufnimmt, und daß die Oberfläche der Ringnut (18) mit dem anderen Ende der hohlzylindrischen Seitenwand (2) durch Vulkanisation verbunden ist.

10. Vorrichtung nach einem der vorhergehenden Ansprüche, dadurch gekennzeichnet, daß in die hohlzylindrische Seitenwand (2) des glockenförmigen Gummibauteiles (1) in nächster Nähe zu ihrer Außenfläche ein Metallzylinder (17) koaxial eingebettet und durch Vulkanisation fest mit der Seitenwand (2) verbunden ist.

11. Vorrichtung nach Anspruch 10, dadurch gekennzeichnet, daß der Metallzylinder (17) aus einem Lochblech besteht.

**Claims**

1. Device for resiliently supporting machines on the ground, comprising a load-bearing plate (8) and a bell-shaped rubber component (1), which supports the load-bearing plate (8), consists of a hollow cylindrical side wall (2) and an end wall (3), which extends essentially radially, at one end of the hollow cylindrical side wall (2) and is tightly closed at the other end of the hollow cylindrical side wall (2) by a base plate (4), which extends in the radial direction parallel to the load-bearing plate (8) and, with the side wall (2) and the end wall (3) of the rubber component (1), forms a pressure chamber (5) which can be filled with air, the end wall (3) of the rubber component (1) consisting of a central circular section (6), which comprises a radially extending plane outer surface which, when the rubber component (1) is in the undeformed state, is disposed axially outwards from one end of the hollow cylindrical side wall (2), and of a circular edge section (7), which is arranged coaxially around the central circular section (6), connects the central circular section (6) of the end wall (3) to one end of the hollow cylindrical side wall (2) and the wall thickness of which is less than that of the central circular 6ection (6) of the end wall, and the load-bearing plate (8) being arranged on the outer surface of the central circular section (6) of the end wall (3) and firmly connected to the end wall (3), characterised in that the circular edge section (7) of the end wall (3) of the bellshaped rubber component (1) is in the form of a truncated cone, so that the vibration-damping and shock-absorbing action of the device is improved, and one or more foot/feet (9) project(s) in the axial direction out of the central circular section (6) of the end wall (3) of the bell-shaped rubber component (1) into the pressure chamber (5), the free ends of which feet are at an axial spacing from the base plate (4) when the rubber component (1) is in the undeformed state and come to rest on the base plate (4) if an axial load acting on the load-bearing plate (8) exceeds a predetermined limiting value, and the other ends of which are firmly connected to the load-bearing plate (8), so that, when the free ends of the feet (9) are positioned on the base plate (4), the axial load cannot move the load-bearing plate (8) further in the direction of the base plate (4) and there is no possibility of the device collapsing or buckling when overloaded or the internal pressure is insufficient.

2. Device according to claim 1, characterised in that the foot or feet (9) comprise(s) in the area of its/their free end(s) a radially widened section (15) which, when the rubber component (1) is in the undeformed state, is immersed in a liquid which partly fills the pressure chamber (5).

3. Device according to claim 2, characterised in that the widened section consists of a plate (15), which extends parallel to the base plate (4), is secured to the foot or feet (9) and comprises between itself and the hollow cylindrical side wall (2) one or more by-pass openings (21).

4. Device according to claim 3, characterised in that the plate (15) is a perforated plate.

5. Device according to one of the preceding claims, in which a valve (16) is arranged in the hollow cylindrical side wall (2), characterised in that the valve (16) is a combined airliquid valve through which the pressure chamber (5) can be filled both with air and liquid.

6. Device according to one of the preceding claims, characterised in that the central circular section (6) of the end wall (3) comprises a number of axially extending through-holes (10) corrresponding to the number of feet (9), and the foot or feet (9) is/are arranged tightly and coaxially in the through-hole(s) (10) by way of a respective end section, which is secured to the load-bearing plate (8).

7. Device according to claim 6, characterised in that the load-bearing plate (8) and the foot or feet (9) are firmly connected to the end wall (3) of the rubber component (1) by vulcanization.

8. Device according to one of the preceding claims, characterised in that a plurality of feet (9) are provided which are arranged at equal angular spacings along a circular line extending inside the edge of the load-bearing plate (8).

9. Device according to one of the preceding claims, characterised in that the base plate (9) comprises a circular groove (18) which holds the other end of the hollow cylindrical side wall (2), and that the surface of the circular groove (18) is connected to the other end of the hollow cylindrical side wall (2) by vulcanization.

10. Device according to one of the preceding claims, characterised in that a metal cylinder (17) is embedded coaxially in the hollow cylindrical side wall (2) of the bell-shaped rubber component (1) in close proximity to its outer surface and is firmly connected to the side wall (2) by vulcanization.

11. Device according to claim 10, characterised in that the metal cylinder (17) consists of a perforated metal sheet.

**Revendications**

1. Dispositif d'appui élastique de machines sur le sol, comportant une plaque support de charge (8) et un élément en caoutchouc en forme de cloche (1) supportant cette plaque (8), constitué d'une paroi latérale cylindrique (2) et d'une paroi frontale (3) s'étendant dans l'ensemble radialement, disposée à une extrémité de cette paroi latérale (2), et fermée hermétiquement à l'autre extremite de la paroi latérale cylindrique (2) par une plaque de base (4) s'étendant radialement, parallèle a la plaque support de charge (8) et délimitant avec la paroi laterale (2) et la paroi frontale (3) de l'élément en caoutchouc (1) une chambre à pression (5) pouvant être remplie d'air, la paroi frontale (3) de l'elément en caoutchouc étant constituée d'une partie centrale circulaire (6) ayant une face extérieure plane s'étendant radialement qui, lorsque l'élément en caoutchouc (1) est à l'état non déformé, est décalée axialement vers l'extérieur de l'extrémité citée en premier de la paroi latérale cylindrique (2), et d'une partie extérieure en forme de couronne circulaire (7) située coaxialement autour de la partie centrale circulaire (6), réunissant celle-ci à l'extrémité citée en premier de la paroi laterale cylindrique (2), et moins épaisse que la partie centrale circulaire (6), la plaque support de charge (8) étant placée sur la face extérieure de la partie centrale circulaire (6) de la paroi frontale (3) et fixée à cette dernière, caractérisé par le fait que la partie extérieure en forme de couronne circulaire (7) de la paroi frontale (3) de l'élément en caoutchouc en forme de cloche (1) est tronconique, de sorte que l'effet d'amortissement des vibrations et d'absorption des chocs du dispositif est accru, et, de la partie centrale circulaire (6) de la paroi frontale (3) de l'élément en caoutchouc en forme de cloche (1), saillent dans la chambre à pression (5), en direction axiale, un ou plusieurs pieds (9) dont l'extrémité libre est à une certaine distance axiale de la plaque de base (4) lorsque l'élément en caoutchouc (1) est à l'état non déformé, et vient s'appuyer sur la plaque de base (4) lorsqu'une charge axiale agissant sur la plaque support de charge (8) dépasse une limite déterminée, et dont l'autre extrémité est fixée à la plaque support de charge (8), de sorte que la charge axiale ne peut pas mouvoir davantage la plaque support de charge (8) vers la plaque de base (4) lorsque l'extrémité libre des pieds (9) repose sur la plaque de base (4), et qu'un effondrement ou un flambage du dispositif est impossible en cas de surcharge ou de manque de pression intérieure.

2. Dispositif selon la revendication 1, caractérisé par le fait que le ou les pieds (9) ont dans la zone de leurs extrémités libres une partie élargie radialement (15) qui, lorsque l'élément en caoutchouc (1) est à l'etat non déformé, est immergée dans un liquide (14) qui remplit partiellement la chambre à pression (5).

3. Dispositif selon la revendication 2, caractérisé par le fait que la partie élargie est constituée d'une plaque (15) parallèle à la plaque de base (14) qui est fixée au ou aux pieds (9) et entre laquelle et la paroi latérale cylindrique (2) sont prévus un ou plusieurs passages (20).

4. Dispositif selon la revendication 3, caractérisé par le fait que la plaque (15) est une plaque perforée.

5. Dispositif selon l'une des revendications précédentes, dans la paroi latérale cylindrique (2) duquel est montée une valve (16), caractérisé par le fait que la valve (16) est une valve combinée à air et liquide par laquelle de l'air et du liquide peuvent être introduits dans la chambre à pression (5).

6. Dispositif selon l'une des revendications précédentes, caractérisé par le fait que la partie centrale circulaire (6) de la paroi frontale (3) a un certain nombre, correspondant au nombre de pieds (9), de trous axiaux traversants (10), et le ou les pieds (9) sont, à une partie extrême qui est fixée à la plaque support de charge (8), logés coaxialement de manière étanche dans le ou les trous traversants (10).

7. Dispositif selon la revendication 6, caractérisé par 15 le fait que la plaque support de charge (8) et le ou les pieds (9) sont fixés par vulcanisation à la paroi frontale (3) de l'élément en caoutchouc (1).

8. Dispositif selon l'une des revendications précedentes, caractérisé par le fait qu'il est prévu plusieurs pieds (9) disposés à des distances angulaires égales sur un cercle situé a l'intérieur du bord de la plaque support de charge (8).

9. Dispositif selon l'une des revendications précédentes, caractérisé par le fait que la plaque de base (4) présente une rainure circulaire (18) qui reçoit l'autre extrémité de la paroi latérale cylindrique (2), et que la surface de cette rainure (18) est unie par vulcanisation à cette autre extrémité de la paroi latérale cylindrique (2).

10. Dispositif selon l'une des revendications précédentes, caractérisé par le fait qu'un cylindre métallique (17) est encastré coaxialement dans la paroi latérale cylindrique (2) de l'élément en caoutchouc en forme de cloche (1) à proximité immédiate de la face extérieure de celle-ci et fixé par vulcanisation à cette paroi latérale (2).

11. Dispositif selon la revendication 10, caractérisé par le fait que le cylindre métallique (17) est en tôle perforée.

EP 0 240 028 B1